# EUROPÄISCHE PATENTANMELDUNG

(11) **EP 3 106 300 A1**
(43) Veröffentlichungstag der Anmeldung: **21.12.2016**
(21) Anmeldenummer: 15001759.8
(22) Anmeldetag: 15.06.2015
(51) Int. Cl.: B32B 5/22, B32B 5/24, B32B 5/26, B32B 7/00, B32B 7/12, B32B 9/00, B32B 9/04, B32B 15/14, B32B 21/04, B32B 21/10, B32B 1/06, B32B 3/08, B32B 3/14, B32B 3/16, B44C 1/26, B27D 1/00, B32B 21/08, E04F 15/16, B44C 3/02

(54) **MEHRSCHICHTVERBUND, VERFAHREN ZU SEINER HERSTELLUNG UND SEINE VERWENDUNG**

(71) Anmelder: Danzer GmbH, 6340 Baar (CH)
(72) Erfinder: Gräßer, Johannes, 01187 Dresden (DE)
(74) Vertreter: Ricker, Mathias

(57) **Zusammenfassung**

Mehrschichtverbund mindestens aufweisend:
eine dekorative Schicht aufweisend ein erstes dekoratives Material und ein zweites dekoratives Material, wobei das erste und das zweite dekorative Material in der dekorativen Schicht in einer Ebene liegen und die gleiche Dicke aufweisen;
eine erste Trägerschicht für eine Leimschicht, wobei die erste Trägerschicht einen Kunststoff aufweist, der in einem Vlies oder einem Gewebe enthalten ist;
wobei die dekorative Schicht mit der ersten Trägerschicht durch die Leimschicht verbunden ist.

## Beschreibung

### GEBIET DER ERFINDUNG

Die vorliegende Erfindung betrifft einen Mehrschichtverbund mit einer dekorativen Schicht, welche Intarsien aufweist, wobei die dekorative Schicht mittels einer Leimschicht mit einer Trägerschicht verbunden ist, die einen Kunststoff aufweist, der in einem Vlies oder einem Gewebe enthalten ist, sowie ein Verfahren zur Herstellung des Mehrschichtverbunds. Die Erfindung betrifft auch die Verwendung des Mehrschichtverbunds. Die Erfindung betrifft ferner auch einen rohen Mehrschichtverbund, der als Zwischenprodukt bei der Herstellung des Mehrschichtverbunds entsteht.

### HINTERGRUND DER ERFINDUNG

Bekanntlich können Intarsien-haltige Gegenstände dadurch hergestellt werden, dass auf einer planen Oberfläche beispielsweise verschiedene Hölzer so ineinander gelegt werden, dass wieder eine ebene Fläche entsteht, die aber nun verschiedenfarbige und unterschiedlich strukturierte Einschlüsse enthält. Beispielsweise können in einem Holz, vorzugsweise einem Furnier, Aussparungen angebracht werden, in die dann das entsprechend zurechtgeschnittene andere Holz, beispielsweise gleichfalls ein Furnier, aber auch ein anderes Material wie beispielsweise ein Metall, eingefügt werden kann. Derartige Verfahren erfordern manuelle Verfahrensschritte und sind daher aufwändig und kostenintensiv. Es wurden daher Verfahren vorgeschlagen, die technisch einfacher und wirtschaftlicher realisierbar sein sollen.

GB 1 382 319 offenbart ein Verfahren zur Herstellung von Holzfurnieren mit Einlagen, die beispielsweise aus Metall bestehen können. Das Verfahren umfasst das Einpressen des Metalls in eine Seite des Furniers, so lange bis eine Oberfläche des Metalls bündig mit der Oberfläche des Furniers abschließt. Dabei wird die andere Seite des Furniers während des Verpressens durch eine deformierbare Lage im Presswerkzeug gestützt. Das auf dieser Seite durch die Einwirkung des Metalls hervortretende Holz wird dann durch Abschleifen entfernt bis das vollständig von Holz umgebene Metall sichtbar wird. Derartig hergestellte Holzfurniere mit Metalleinlagen können jedoch gegenüber Anwendungen, welche nicht nur der Dekoration dienen, sondern auch mit mechanischen Belastungen verbunden sind, empfindlich sein, da die Einlage lediglich durch die Klemmung im Furnier gehalten wird. Die Einlage kann somit wenig Stabilisierung im Furnier aufweisen und sich aus diesem bei mechanischer Belastung lösen.

Verfahren, die zur Stabilisierung das Einleimen der Einlage in das Furnier vorsehen, können gleichfalls unbefriedigend sein, da Leim zwischen Furnier und Einlage austreten und den dekorativen Eindruck mindern kann.

### AUFGABE DER ERFINDUNG

Eine Aufgabe der vorliegenden Erfindung ist es Intarsien-haltige Gegenstände mit verbesserter Stabilität ohne Beeinträchtigung der dekorativen Wirkung zur Verfügung zu stellen, die im industriellen Maßstab mit verbesserter Wirtschaftlichkeit hergestellt werden können.

### ZUSAMMENFASSUNG DER ERFINDUNG

Diese Aufgabe konnte dadurch gelöst werden, dass Intarsien-haltige Gegenstände durch Verpressen dekorativer Materialien und Abschleifen hergestellt werden, wobei sie rückseitig durch eine einen Kunststoff und Leim aufweisende Trägerschicht in Form eines Vlieses oder Gewebes stabilisiert werden, wobei der Leim das Vlies oder das Gewebe mit den dekorativen Materialien verbindet. Besonders vorteilhaft ist es, dass neben der verbesserten Stabilität derartige Gegenstände, die in Form eines Mehrschichtverbundes vorliegen, für die verschiedensten Anwendungen mannigfach weiterverarbeitet werden können, da insbesondere das leimhaltige Vlies oder Gewebe weitere Verarbeitungsschritte erlaubt. Beispielsweise können weitere Materialien, die ihrerseits Verarbeitungsschritten wie einem Hinterspritzen mit Kunststoffen zugänglich sind, aufgebracht werden. Die nach dem erfindungsgemäßen Verfahren hergestellten Mehrschichtverbunde können vorteilhaft auf einfach gekrümmte oder leicht doppelt gekrümmte Flächen aufgebracht werden, da das Vlies oder das Gewebe das Biegen des Mehrschichtverbunds ohne Reißen der dekorativen Materialien erlaubt und somit eine gute Biegestabilität und Querzugfestigkeit gewährleistet.

In einem *ersten Aspekt* betrifft die Erfindung somit einen Mehrschichtverbund mindestens aufweisend:
eine dekorative Schicht aufweisend ein erstes dekoratives Material und ein zweites dekoratives Material, wobei das erste und das zweite dekorative Material in der dekorativen Schicht in einer Ebene liegen und die gleiche Dicke aufweisen;
eine erste Trägerschicht für eine Leimschicht, wobei die erste Trägerschicht einen Kunststoff aufweist, der in einem Vlies oder einem Gewebe enthalten ist;
wobei die dekorative Schicht mit der ersten Trägerschicht durch die Leimschicht verbunden ist.

In einer Ausführungsform besteht das erste dekorative Material aus Holz oder weist Holz auf.

In einer weiteren Ausführungsform ist das zweite dekorative Material ausgewählt aus der Gruppe bestehend aus: Holz, Metall, Kunststoff, Keramik, Glas, Glasfaser oder Kohlefaser, oder zwei oder mehr davon.

In einer weiteren Ausführungsform ist das zweite dekorative Material vom ersten dekorativen Material vollständig oder von diesem nur teilweise umgeben.

In einer Ausführungsform ist der Kunststoff des ersten Trägermaterials ausgewählt aus der Gruppe bestehend aus: Cellulose, Polyester, Polyether, Polyamid, Polysulfon, oder Polyolefin, oder zwei oder mehr davon.

In einer weiteren Ausführungsform ist der Leim der Leimschicht ausgewählt aus der Gruppe bestehend aus: Melaminharz, Phenolharz, Polyvinylalkohol, Polyurethan, Ethylenvinylacetat, oder zwei oder mehr davon.

In einer Ausführungsform ist die erste Trägerschicht auf der der dekorativen Schicht abgewandten Seite mittels einer Leimschicht mit einer zweiten Trägerschicht verbunden, wobei die zweite Trägerschicht ein Material aufweist ausgewählt aus: Holzwerkstoff, Holz, Blech, Kunststoff, Kunststofffolie, oder Metallfolie, oder Kunststoff, der in einem Vlies oder in einem Gewebe enthalten ist.

In einer weiteren Ausführungsform ist die erste Trägerschicht auf der der dekorativen Schicht abgewandten Seite mittels einer Leimschicht mit einer zweiten Trägerschicht verbunden, wobei die zweite Trägerschicht ein Material aufweist ausgewählt aus: Holzwerkstoff, Holz, Blech, Kunststoff, Kunststofffolie, oder Metallfolie, oder Kunststoff, der in einem Vlies oder in einem Gewebe enthalten ist, wobei der Kunststoff des Vlieses oder Gewebes ausgewählt ist aus der Gruppe bestehend aus: Cellulose, Polyester, Polyether, Polyamid, Polysulfon, Polyolefin.

In einer Ausführungsform weist die dekorative Schicht eine Dicke von 2 mm oder weniger auf.

In einer Ausführungsform weist die zweite Trägerschicht auf der der ersten Trägerschicht abgewandten Seite einen Kunststoff auf, wobei dieser Kunststoff ein zusätzlicher Kunststoff ist, wenn die zweite Trägerschicht einen Kunststoff aufweist, der in einem Vlies oder einem Gewebe enthalten ist.

In einem ***zweiten Aspekt*** betrifft die Erfindung ein Verfahren zur Herstellung eines Mehrschichtverbundes wie im ***ersten Aspekt*** definiert, aufweisend zumindest die Stufen (S) bis (X):
- (S): Bereitstellen eines ersten dekorativen Materials;
- (T): Kontaktieren eines zweiten dekorativen Materials mit dem ersten dekorativen Material;
- (U): Kontaktieren eines ersten Trägermaterials mit dem zweiten dekorativen Material, wobei das erste Trägermaterial einen Kunststoff und Leim aufweist, wobei der Kunststoff in einem Vlies oder einem Gewebe enthalten ist;
- (V): Verpressen des ersten dekorativen Materials mit dem zweiten dekorativen Material und dem ersten Trägermaterial in einer Pressvorrichtung bei einer Temperatur, welche ausreicht, den Leim zu aktivieren, wobei sich aus dem ersten Trägermaterial und dem Leim eine erste Trägerschicht und eine Leimschicht bilden, und wobei das zweite dekorative Material in das erste dekorative Material eindringt und einen Bereich des ersten dekorativen Materials deformiert, wobei eine Oberfläche des ersten und des zweiten dekorativen Materials auf der ersten Trägerschicht in einer Ebene liegen, und wobei die Pressvorrichtung so ausgestaltet ist, dass sie ein deformierbares Presspolster aufweist, welches erlaubt, den durch das zweite dekorative Material im ersten dekorativen Material deformierten Bereich aufzunehmen, wobei das erste und das zweite dekorative Material eine deformierte dekorative Schicht bilden, wobei die deformierte dekorative Schicht mit der ersten Trägerschicht über die Leimschicht verbunden ist;
- (W): Entnehmen des verpressten Verbunds der Stufe (V) aus der Pressvorrichtung;
- (X): Abschleifen des deformierten Bereichs der dekorativen Schicht so lange, bis das erste und das zweite dekorative Material in einer Ebene liegen und die gleiche Dicke aufweisen.

In einer Ausführungsform weist das deformierbare Presspolster ein Material auf, welches Cellulosefasern aufweist, wobei das Presspolster mit der Pressvorrichtung nicht fest verbunden ist.

In einer Ausführungsform liegt der Druck beim Verpressen im Bereich von 1 - 30 N/mm², vorzugsweise 5 bis 30 N/mm², mehr bevorzugt 20 - 30 N/mm² und die Temperatur im Bereich von 50 - 200 °C, vorzugsweise 100 - 180 °C, mehr bevorzugt 130 - 180 °C.

In einer Ausführungsform weist das Verfahren weiter die Stufe (Y) auf:
- (Y): Kontaktieren des ersten Trägermaterials mit einem zweiten Trägermaterial, wobei das zweite Trägermaterial ein Material aufweist ausgewählt aus: Holzwerkstoff, Holz, Blech, Kunststoff, Kunststofffolie, oder Metallfolie, oder einen Kunststoff aufweist, der in einem Vlies oder einem Gewebe enthalten ist, derart, dass beim Verpressen sich aus dem zweiten Trägermaterial eine zweite Trägerschicht bildet, die mit der ersten Trägerschicht mittels einer Leimschicht verbunden ist.

In einer weiteren Ausführungsform weist das Verfahren weiter die Stufe (Z) auf:
- (Z): Aufbringen eines Kunststoffes auf die der ersten Trägerschicht abgewandten Seite der zweiten Trägerschicht, vorzugsweise durch Hinterspritzen.

In einem ***dritten Aspekt*** betrifft die Erfindung die Verwendung eines Mehrschichtverbunds wie im ***ersten Aspekt*** definiert, oder die Verwendung eines Mehrschichtverbunds hergestellt nach einem Verfahren wie im ***zweiten Aspekt*** definiert, beim Möbel-, Fahrzeug-, Schiffs- und Flugzeugbau sowie für die Herstellung von Wandpanelen, Innenausbauelementen, Fußböden, Gehäusen und Dekorelementen.

In einem ***vierten Aspekt*** betrifft die Erfindung einen rohen Mehrschichtverbund, der als Zwischenprodukt bei der Herstellung des Mehrschichtverbunds wie im ***ersten Aspekt*** definiert entsteht. Demgemäß betrifft die Erfindung einen Mehrschichtverbund, mindestens aufweisend:
eine dekorative Schicht aufweisend ein erstes dekoratives Material und ein zweites dekoratives Material, wobei eine Oberfläche des ersten dekorativen Materials und eine Oberfläche des zweiten dekorativen Materials in der dekorativen Schicht in einer Ebene liegen, und die andere Oberfläche des ersten dekorativen Materials und die andere Oberfläche des zweiten dekorativen Materials in der dekorativen Schicht nicht in einer Ebene liegen, derart, dass zumindest ein Bereich des ersten dekorativen Materials durch das zweite dekorative Material deformiert ist;
eine erste Trägerschicht für eine Leimschicht, wobei die Trägerschicht einen Kunststoff aufweist, der in einem Vlies oder einem Gewebe enthalten ist;
wobei die dem deformierten Bereich abgewandte Seite der dekorativen Schicht mit der ersten Trägerschicht durch die Leimschicht verbunden ist.

In einer Ausführungsform haftet zumindest dem Bereich des ersten dekorativen Materials, welches durch das zweite dekorative Material verformt ist, ein Material an, welches Cellulosefasern aufweist.

Dieser Mehrschichtverbund kann nach einem Verfahren hergestellt werden, zumindest aufweisend die Stufen (S) bis (W) wie im ***zweiten Aspekt*** definiert.

Der Mehrschichtverbund, welchem Material anhaftet, welches Cellulosefasern aufweist, kann nach einem Verfahren hergestellt werden, bei dem das deformierbare Presspolster ein Material aufweist, welches Cellulosefasern aufweist, wobei das Presspolster mit der Pressvorrichtung nicht fest verbunden ist.

### KURZE BESCHREIBUNG DER FIGUREN

In den Figuren zeigt
- **Fig. 1**: die Bestückung einer Pressvorrichtung, welche Pressbacken oder Pressplatten aufweist, mit Ausgangsmaterialien für die Herstellung eines erfindungsgemäßen Mehrschichtverbunds;
- **Fig. 2**: das Schließen der Pressvorrichtung bzw. der Pressbacken der Pressvorrichtung unter Druck- und Temperatureinwirkung;
- **Fig. 3**: den verpressten rohen Mehrschichtverbund der Erfindung;
- **Fig. 4**: den abgeschliffenen Mehrschichtverbund der Erfindung.

### DETAILLIERTE BESCHREIBUNG DER ERFINDUNG

Im Folgenden sind die Begriffe in Anführungs- und Schlusszeichen im Sinne der Erfindung definiert.

In einem ***ersten Aspekt*** betrifft die Erfindung einen Mehrschichtverbund mindestens aufweisend:
eine dekorative Schicht aufweisend ein erstes dekoratives Material und ein zweites dekoratives Material, wobei das erste und das zweite dekorative Material in der dekorativen Schicht in einer Ebene liegen und die gleiche Dicke aufweisen;
eine erste Trägerschicht für eine Leimschicht, wobei die Trägerschicht einen Kunststoff aufweist, der in einem Vlies oder einem Gewebe enthalten ist;
wobei die dekorative Schicht mit der ersten Trägerschicht durch die Leimschicht verbunden ist.

Der Begriff "*Mehrschichtverbund*" bedeutet einen Verbund aus gleichen oder verschiedenen Materialien, die in Schichten übereinander oder untereinander angeordnet sind, wobei ein Verbund gebildet wird, nämlich der Mehrschichtverbund der vorliegenden Erfindung.

Der Begriff "*Schicht*" bedeutet eine Lage eines Materials, vorzugsweise eines dekorativen Materials, eines Trägermaterials oder eines Leims, wobei die Schicht vorzugsweise plane Oberflächen aufweist.

Der Begriff "*dekorative Schicht*" bedeutet eine Schicht, welche effektvoll, schmückend, wirkungsvoll oder zierend ist. Im Allgemeinen wird dieser Eindruck subjektiv dem Betrachter unterliegen.

Der Begriff "*Material*" bedeutet einen Gegenstand in beliebiger Zusammensetzung und Form. Materialien sind vorzugsweise Holz, vorzugsweise in Form eines Furniers, Metall, Kunststoff, Keramik, oder zwei oder mehr davon.

Der Begriff "*dekoratives Material*" bedeutet einen Gegenstand in beliebiger Zusammensetzung und Form, welches effektvoll, schmückend, wirkungsvoll oder zierend ist. Im Allgemeinen wird auch dieser Eindruck subjektiv dem Betrachter unterliegen.

Aufgrund der Subjektivität des Begriffs "*dekorativ*" können die Begriffe "*dekorative Schicht*" und "*dekoratives Material*" (*"erstes dekoratives Material*"*,* "*zweites dekoratives Material*") im Sinne der Erfindung auch lediglich in der Bedeutung von "*Schicht*" und "*Material*" (*"erstes Material*"*,* "*zweites Material*") verwendet werden.

Der Mehrschichtverbund ist nicht auf zwei dekorative Materialien beschränkt, sondern kann beliebig viele dekorative Materialien aufweisen, also ein erstes dekoratives Material, ein zweites dekoratives Material, ein drittes dekoratives Material, ein viertes dekoratives Material, ein fünftes dekoratives Material, usw.

In einer Ausführungsform kann ein Material aus Holz, Metall, Kunststoff, Keramik, oder zwei oder mehr davon bestehen oder Holz, Metall, Kunststoff, Keramik, oder zwei oder mehr davon aufweisen.

Das erste und das zweite dekorative Material können gleich oder verschieden voneinander sein.

In einer Ausführungsform besteht das erste dekorative Material aus Holz oder weist Holz auf. Vorzugsweise liegt das Holz dann in Form eines Furniers vor.

Der Begriff "*Furnier*" schließt Blätter aus Holz mit einer Dicke zwischen 0,1 mm und 6 mm, vorzugsweise 0,1 bis 2 mm, mehr bevorzugt 0,1 mm bis 1 mm oder weniger als 0,8 mm ein.

In einer Ausführungsform ist das zweite dekorative Material ausgewählt aus Holz, Metall, Kunststoff, Keramik, Glas, Glasfaser oder Kohlefaser, oder zwei oder mehr davon.

In einer Ausführungsform sind sowohl das erste und das zweite dekorative Material aus Holz oder weisen Holz auf. Dann wird vorzugsweise für das zweite dekorative Material ein Holz ausgewählt, welches sich vom Holz des ersten dekorativen Materials unterscheidet.

In einer Ausführungsform besteht das erste dekorative Material aus Holz und das zweite dekorative Material besteht aus Metall.

In einer weiteren Ausführungsform weist das erste dekorative Material Holz auf und das zweite dekorative Material weist Metall auf.

Der Begriff "*Metall*" schließt reine Metalle wie auch Legierungen ein.

Metalle sind beispielsweise Aluminium, Kupfer, oder Messing.

Das erste dekorative Material und das zweite dekorative Material können in der dekorativen Schicht beliebig angeordnet sein, solange sie in einer Ebene liegen und die gleiche Dicke aufweisen.

Der Begriff "*gleiche Dicke"* lässt Abweichungen der dekorativen Materialien voneinander um bis zu 1/10 mm zu.

In einer Ausführungsform ist das zweite dekorative Material vom ersten dekorativen Material vollständig umgeben.

Der Begriff "*wobei das erste und das zweite dekorative Material in der dekorativen Schicht in einer Ebene liegen und die gleiche Dicke aufweisen, und das zweite dekorative Material vom ersten dekorativen Material umgeben ist*" bedeutet, dass das erste und zweite dekorative Material Intarsien darstellen, die auf einer planen Oberfläche, nämlich der Leimschicht, so ineinander angeordnet sind, dass wieder eine ebene Fläche entsteht, die aber nun verschiedenfarbige und unterschiedlich strukturierte Einschlüsse enthalten kann.

Der Begriff "*Intarsie*" bedeutet eine Dekorationstechnik in Form einer Einlegearbeit, bei der gleiche oder verschiedene Materialien wie hierin definiert auf einer ebenen Oberfläche, nämlich der ersten Trägerschicht, so übereinander gelegt werden, dass nach der Bearbeitung wie hierin definiert wieder eine ebene Fläche entsteht, die aber nun verschiedenfarbige und/oder unterschiedlich strukturierte Einschlüsse enthält.

In einer weiteren Ausführungsform ist das zweite dekorative Material vom ersten dekorativen Material nicht vollständig umgeben, d.h. es ist von diesem nur teilweise umgeben.

In einer Ausführungsform ist das erste dekorative Material flächig ausgebildet, und das zweite dekorative Material ist gleichfalls flächig ausgebildet.

In einer weiteren Ausführungsform ist das erste dekorative Material flächig ausgebildet, und das zweite dekorative Material ist linienförmig oder länglich ausgebildet.

Der Begriff "*erste Trägerschicht*" bedeutet eine Schicht eines Materials, welches geeignet ist, eine Leimschicht zu tragen. Erfindungsgemäß weist die erste Trägerschicht ein Material auf, nämlich einen Kunststoff, der in einem Vlies oder einem Gewebe enthalten ist.

Der Begriff "*Kunststoff*" bedeutet einen organischen polymeren Festkörper, der synthetisch oder halbsynthetisch aus monomeren organischen Molekülen oder aus Biomolekülen hergestellt wird. Der Kunststoff kann ein Thermoplast, ein Duroplast oder ein Thermoplast sein.

Bevorzugte Kunststoffe sind ausgewählt aus der Gruppe bestehend aus: Cellulose, Polyester, Polyether, Polyamid, Polysulfon, oder Polyolefin, oder zwei oder mehr davon.

Der Begriff "*Vlies*" bedeutet ein Gebilde aus Fasern begrenzter Länge, Endlosfasern oder geschnittenen Garnen jeglicher Art und jeglichen Ursprungs, die in beliebiger Weise zu einer Faserschicht zusammengefügt und in beliebiger Weise miteinander verbunden worden sind, die aber nicht miteinander verwoben sind.

Der Begriff "*Gewebe*" bedeutet ein Gebilde aus Fasern begrenzter Länge, Endlosfasern oder geschnittenen Garnen jeglicher Art und jeglichen Ursprungs, die in beliebiger Weise zu einer Faserschicht zusammengefügt und in beliebiger Weise miteinander verbunden worden sind, die miteinander verwoben sind.

Der Begriff "*Leimschicht*" bedeutet eine Schicht eines Leims oder Klebers.

Die Begriffe "*Leim*" und "*Kleber*" werden synonym zueinander verwendet.

In einer Ausführungsform ist der Leim der Leimschicht ausgewählt aus der Gruppe bestehend aus: Melaminharz, Phenolharz, Polyvinylalkohol, Polyurethan, Ethylenvinylacetat, oder zwei oder mehr davon.

Der Leim befindet sich auf der ersten Trägerschicht, d.h. in der Leimschicht, kann sich aber auch in der Trägerschicht, d.h. im Vlies bzw. auf dem Kunststoff oder den Kunststoffen des Vlieses befinden, oder im Gewebe bzw. auf dem Kunststoff oder den Kunststoffen des Gewebes befinden.

In einer Ausführungsform ist die erste Trägerschicht auf der der dekorativen Schicht abgewandten Seite mittels einer Leimschicht mit einer zweiten Trägerschicht verbunden.

Der Begriff "*zweite Trägerschicht*" bedeutet eine Schicht eines Materials, welches geeignet ist, die erste Trägerschicht zu tragen. Da die erste Trägerschicht Leim aufweist, d.h. in und auf den Oberflächen der ersten Trägerschicht, ist die zweite Trägerschicht mit der ersten Trägerschicht mittels des Leims der ersten Trägerschicht mit dieser verbunden

Die zweite Trägerschicht kann ein Material sein ausgewählt aus der Gruppe bestehend aus: Holzwerkstoff, Holz, Blech, Kunststoff, Kunststofffolie, oder Metallfolie, oder zwei oder mehr davon.

Der Begriff "*Holzwerkstoff*" schließt jeden Werkstoff ein, der durch Zerkleinern von Holz und anschließendem Zusammenfügen der gebildeten Strukturelemente erzeugt wird. Beispielsweise können Holzspäne unter Verleimen zu einem Holzwerkstoff zusammengefügt werden. Auch aus Holzfasern zusammengefügte Produkte sind Holzwerkstoffe, beispielsweise in Form der bekannten "*HD wood fiber boards".*

In einer bevorzugten Ausführungsform weist die zweite Trägerschicht einen Kunststoff auf, der in einem Vlies oder einem Gewebe enthalten ist.

Das Vlies oder das Gewebe der zweiten Trägerschicht weist einen Kunststoff auf ausgewählt aus der Gruppe bestehend aus: Cellulose, Polyester, Polyether, Polyamid, Polysulfon, Polyolefin, oder zwei oder mehr davon.

Somit kann der Kunststoff des Vlieses oder des Gewebes der zweiten Trägerschicht gleich dem Kunststoff des Vlieses oder des Gewebes der ersten Trägerschicht sein oder kann von diesem verschieden sein.

In einer Ausführungsform weist die dekorative Schicht eine Dicke von 2 mm oder weniger auf, vorzugsweise 1 mm oder weniger oder weniger als 0,8 mm.

In einer weiteren Ausführungsform weist/weisen die erste Trägerschicht - und wenn sich im Mehrschichtverbund eine zweite Trägerschicht befindet, welche einen Kunststoff aufweist, der in einem Vlies oder einem Gewebe enthalten ist - jeweils eine Dicke im Bereich von 0,05 bis 0,5 mm auf, bevorzugt von 0,1 bis 0,4 mm.

Die Dicke der zweiten Trägerschicht ist für Materialien, welche von einem Kunststoff, der ein Vlies oder ein Gewebe aufweist, verschieden sind, im Allgemeinen nicht limitiert. Vorzugsweise beträgt dann die Dicke bis zu 2 mm, vorzugsweise nämlich dann, wenn die zweite Trägerschicht vorzugsweise als Blech oder als Holzwerkstoff vorliegt.

In einer weiteren Ausführungsform weist die zweite Trägerschicht auf der der ersten Trägerschicht abgewandten Seite einen Kunststoff auf. Liegt die zweite Trägerschicht in Form eines Kunststoffs vor, der in einem Vlies oder einem Gewebe enthalten ist, enthält diese zweite Trägerschicht auf der der ersten Trägerschicht abgewandten Seite somit einen zusätzlichen Kunststoff.

In einer Ausführungsform ist der Kunststoff oder der zusätzliche Kunststoff ausgewählt aus Acryl-Butadien-Styrol-Copolymerisaten, Styrol-Acrylnitril-Copolymerisaten, Acrylester-Styrol-Acrylnitril-Copolymerisaten, oder zwei oder mehr davon.

Dieser zusätzliche Kunststoff kann so ausgestaltet sein, dass er Haltevorrichtungen aufweist, mittels derer der Mehrschichtverbund an einer Oberfläche befestigt oder mit einem anderen Bauteil verbunden werden kann. Wie im *zweiten Aspekt* der Erfindung erläutert, kann dieser zusätzliche Kunststoff durch Hinterspritzen aufgebracht werden.

In einem ***zweiten Aspekt*** betrifft die Erfindung ein Verfahren zur Herstellung des erfindungsgemäßen Mehrschichtverbundes.

Das Verfahren weist zumindest die Stufen (S) bis (X) auf:
- (S): Bereitstellen eines ersten dekorativen Materials;
- (T): Kontaktieren eines zweiten dekorativen Materials mit dem ersten dekorativen Material;
- (U): Kontaktieren eines ersten Trägermaterials mit dem zweiten dekorativen Material, wobei das erste Trägermaterial einen Kunststoff und Leim aufweist, wobei der Kunststoff in einem Vlies oder einem Gewebe enthalten ist;
- (V): Verpressen des ersten dekorativen Materials mit dem zweiten dekorativen Material und dem ersten Trägermaterial in einer Pressvorrichtung bei einer Temperatur, welche ausreicht, den Leim zu aktivieren, wobei sich aus dem ersten Trägermaterial und dem Leim eine erste Trägerschicht und eine Leimschicht bilden, und wobei das zweite dekorative Material in das erste dekorative Material eindringt und einen Bereich des ersten dekorativen Materials deformiert, wobei eine Oberfläche des ersten und des zweiten dekorativen Materials auf der ersten Trägerschicht in einer Ebene liegen, und wobei die Pressvorrichtung so ausgestaltet ist, dass sie ein deformierbares Presspolster aufweist, welches erlaubt, den durch das zweite dekorative Material im ersten dekorativen Material deformierten Bereich aufzunehmen, wobei das erste und das zweite dekorative Material eine deformierte dekorative Schicht bilden, wobei die deformierte dekorative Schicht mit der ersten Trägerschicht über die Leimschicht verbunden ist;
- (W): Entnehmen des verpressten Verbunds der Stufe (V) aus der Pressvorrichtung;
- (X): Abschleifen des deformierten Bereichs der dekorativen Schicht so lange, bis das erste und das zweite dekorative Material in einer Ebene liegen und die gleiche Dicke aufweisen.

Die Begriffe "*deformierter Bereich"* und "*deformierte dekorative Schicht'* bezeichnen einen gewölbten Bereich bzw. eine gewölbte Schicht.

Der Begriff "*Abschleifen des deformierten Bereichs der dekorativen Schicht so lange, bis das erste und das zweite dekorative Material in einer Ebene liegen und die gleiche Dicke aufweisen*" bedeutet somit, dass die Oberflächen des ersten dekorativen Materials und des zweiten dekorativen Materials, also die jeweiligen Oberseiten und die jeweiligen Unterseiten, jeweils in einer Ebene liegen, bei einer tolerierbaren Abweichung von 1/10 mm.

Das Abschleifen kann sowohl händisch wie auch maschinell erfolgen, wobei im Sinne einer wirtschaftlichen Herstellung das maschinelle Abschleifen bevorzugt ist.

In einer Ausführungsform weist das Verfahren mindestens die Stufen (S), (T1), (U1), (V), (W) und (X) auf:
- (S): Bereitstellen eines ersten dekorativen Materials;
- (T1): Positionieren eines zweiten dekorativen Materials unter das erste dekorative Material;
- (U1): Positionieren eines ersten Trägermaterials unter das zweite dekorative Material, wobei das erste Trägermaterial einen Kunststoff und Leim aufweist, wobei der Kunststoff in einem Vlies oder einem Gewebe enthalten ist;
- (V): Verpressen des ersten dekorativen Materials mit dem zweiten dekorativen Material und dem ersten Trägermaterial in einer Pressvorrichtung bei einer Temperatur, welche ausreicht, den Leim zu aktivieren, wobei sich aus dem ersten Trägermaterial und dem Leim eine erste Trägerschicht und eine Leimschicht bilden, und wobei das zweite dekorative Material in das erste dekorative Material eindringt und einen Bereich des ersten dekorativen Materials deformiert, wobei eine Oberfläche des ersten und des zweiten dekorativen Materials auf der ersten Trägerschicht in einer Ebene liegen, und wobei die Pressvorrichtung so ausgestaltet ist, dass sie ein deformierbares Presspolster aufweist, welches erlaubt, den durch das zweite dekorative Material im ersten dekorativen Material deformierten Bereich aufzunehmen, wobei das erste und das zweite dekorative Material eine deformierte dekorative Schicht bilden, wobei die deformierte dekorative Schicht mit der ersten Trägerschicht über die Leimschicht verbunden ist;
- (W): Entnehmen des verpressten Verbunds der Stufe (V) aus der Pressvorrichtung;
- (X): Abschleifen des deformierten Bereichs der dekorativen Schicht so lange, bis das erste und das zweite dekorative Material in einer Ebene liegen und die gleiche Dicke aufweisen.

In einer weiteren Ausführungsform weist das Verfahren mindestens die Stufen (S), (T2), (U2), (V), (W) und (X) auf:
- (S): Bereitstellen eines ersten dekorativen Materials;
- (T2): Positionieren eines zweiten dekorativen Materials auf das erste dekorative Material;
- (U2): Positionieren eines ersten Trägermaterials auf das zweite dekorative Material, wobei das erste Trägermaterial einen Kunststoff und Leim aufweist, wobei der Kunststoff in einem Vlies oder einem Gewebe enthalten ist;
- (V): Verpressen des ersten dekorativen Materials mit dem zweiten dekorativen Material und dem ersten Trägermaterial in einer Pressvorrichtung bei einer Temperatur, welche ausreicht, den Leim zu aktivieren, wobei sich aus dem ersten Trägermaterial und dem Leim eine erste Trägerschicht und eine Leimschicht bilden, und wobei das zweite dekorative Material in das erste dekorative Material eindringt und einen Bereich des ersten dekorativen Materials deformiert, wobei eine Oberfläche des ersten und des zweiten dekorativen Materials auf der ersten Trägerschicht in einer Ebene liegen, und wobei die Pressvorrichtung so ausgestaltet ist, dass sie ein deformierbares Presspolster aufweist, welches erlaubt, den durch das zweite dekorative Material im ersten dekorativen Material deformierten Bereich aufzunehmen, wobei das erste und das zweite dekorative Material eine deformierte dekorative Schicht bilden, wobei die deformierte dekorative Schicht mit der ersten Trägerschicht über die Leimschicht verbunden ist;
- (W): Entnehmen des verpressten Verbunds der Stufe (V) aus der Pressvorrichtung;
- (X): Abschleifen des deformierten Bereichs der dekorativen Schicht so lange, bis das erste und das zweite dekorative Material in einer Ebene liegen und die gleiche Dicke aufweisen.

Trägermaterialien der Stufe (U) bzw. (U1) und (U2), welche einen Kunststoff und Leim aufweisen, wobei der Kunststoff in einem Vlies oder einem Gewebe enthalten ist, sind bekannt und kommerziell erhältlich.

Der Begriff "*Aktivierung von Leim"* bedeutet, dass der Leim, der im und auf dem ersten Trägermaterial vorliegt, bei Raumtemperatur im Allgemeinen keine klebrigen Eigenschaften aufweist, sondern dass erst bei Temperatureinwirkung, die zum Erweichen oder zum teilweise oder vollständigen Schmelzen des Leims führen kann, die Eigenschaften erzeugt werden, die zur Haftung der dekorativen Schicht auf der Trägerschicht führt.

Demgemäß kann in einer Ausführungsform der Leim als Schmelzkleber vorliegen, beispielsweise in Form von Ethylenvinylacetat.

In einer weiteren Ausführungsform liegt der Leim so vor, dass beim Erhitzen reaktive Gruppen, die sich im Leim befinden, aktiviert werden, beispielsweise Methylolgruppen eines Melaminharzes. Diese reaktiven Gruppen können dann mit geeigneten Gruppen der dekorativen Schicht reagieren, derart, dass die dekorative Schicht auf der Trägerschicht haftet.

Der Begriff "*Pressvorrichtung*" bedeutet jegliche Vorrichtung, welche geeignet ist, die Stufe (V) auszuführen. Derartige Pressvorrichtungen weisen vorzugsweise Pressbacken auf, zwischen welche die für die Herstellung des Mehrschichtverbunds vorgesehenen Materialien in geeigneter Weise positioniert werden. Der Begriff "*Pressbacke*" wird synonym zum Begriff "*Pressplatte*" verwendet.

Der Begriff "*Presspolster*" bedeutet vorzugsweise ein Material, welches aufgrund seiner Verformbarkeit unter Druck geeignet ist, den Druck vollflächig auf den herzustellenden Mehrschichtverbund zu übertragen, d.h. den Druck möglichst gleichförmig zu verteilen.

Geeignete Materialien für das Presspolster der Pressvorrichtung können vorzugsweise ausgewählt werden aus deformierbaren Materialien wie Gummi, Silikon, Polyurethan, Materialien, welche Cellulosefasern aufweisen, wie Papier, vorzugsweise Kraftpapier, oder Pappe, oder auch aus Holzwerkstoffen. Die Pressbacken der Pressvorrichtung können zum Schutze des Mehrschichtverbunds vor Beschädigungen eine Kunststofffolie aufweisen. Eine derartige Kunststofffolie kann auch das Anhaften des Mehrschichtverbundes am Presswerkzeug verhindern.

In einer Ausführungsform weist das deformierbare Presspolster ein Material auf, welches Cellulosefasern aufweist.

In einer Ausführungsform ist das Presspolster in der Pressvorrichtung fest verankert.

In einer weiteren Ausführungsform ist das Presspolster aus der Pressvorrichtung entfernbar. In dieser Ausführungsform kann das Presspolster vorzugsweise nach dem Verpressen der Stufe (V) auf der deformierten dekorativen Schicht haften und kann zusammen mit dem noch nicht abgeschliffenen Mehrschichtverbund der Pressvorrichtung in der Stufe (W) entnommen werden. Nach dem Entfernen des anhaftenden Presspolsters kann dann der rohe Mehrschichtverbund gemäß Stufe (X) abgeschliffen werden.

Der im Verfahren beim Verpressen angewandte Druck liegt vorzugsweise im Bereich von 1 - 30 N/mm², vorzugsweise 5 bis 30 N/mm², mehr bevorzugt 20 - 30 N/mm².

Die Temperatur an der Wirkstelle liegt vorzugsweise im Bereich von 50 - 200 °C, vorzugsweise 100-180 °C, mehr bevorzugt 130 - 180 °C.

In einer bevorzugten Ausführungsform liegen der Druck im Bereich von 20-30 N/mm² und die Temperatur im Bereich von 130 - 180 °C.

Die Presszeit liegt vorzugsweise im Bereich von 20 bis 360 s.

In einer Ausführungsform kann das Verfahren so durchgeführt werden, dass das erste Trägermaterial mit einem zweiten Trägermaterial kontaktiert wird, damit die erste Trägerschicht auf der der dekorativen Schicht abgewandten Seite mittels einer Leimschicht mit der zweiten Trägerschicht verbunden ist.

In einer Ausführungsform ist die Mitverwendung eines zweiten Trägermaterials bevorzugt, da Leim aus dem ersten Trägermaterial auch auf der den dekorativen Materialien abgewandten Seite austreten kann. Dies kann den optischen Eindruck oder die Weiterverarbeitung beeinträchtigen. Zur Vermeidung dieser Beeinträchtigung kann dieser Leim dann das erste Trägermaterial mit dem zweiten Trägermaterial verbinden, so dass die Oberflächen des gebildeten Mehrschichtverbunds vorzugsweise leimfrei oder weitgehend leimfrei sind. Dies kann für den optischen Eindruck oder die Weiterverarbeitung des Mehrschichtverbundes vorteilhaft sein.

In einer weiteren Ausführungsform kann sich aber der aus dem ersten Trägermaterial stammende Leim auch auf dem zweiten Trägermaterial befinden sofern dies tolerierbar ist.

Das zweite Trägermaterial kann ein Material sein ausgewählt aus der Gruppe bestehend aus: Holzwerkstoff, Holz, Blech, Kunststoff, Kunststofffolie, oder Metallfolie, oder zwei oder mehr davon.

In einer bevorzugten Ausführungsform weist das zweite Trägermaterial einen Kunststoff auf, der in einem Vlies oder einem Gewebe enthalten ist.

Derartige Vliese oder Gewebe sind bekannt und kommerziell erhältlich.

Das Vlies oder das Gewebe des zweiten Trägermaterials weist einen Kunststoff auf vorzugsweise ausgewählt aus der Gruppe bestehend aus: Cellulose, Polyester, Polyether, Polyamid, Polysulfon, Polyolefin, oder zwei oder mehr davon.

Somit kann der Kunststoff des Vlieses oder des Gewebes des zweiten Trägermaterials gleich dem Kunststoff des Vlieses oder des Gewebes des ersten Trägermaterials sein oder kann von diesem verschieden sein.

In einer Ausführungsform weist das Verfahren die Stufe (Y) auf:
- (Y): Kontaktieren des ersten Trägermaterials mit einem zweiten Trägermaterial, wobei das zweite Trägermaterial ein Material aufweist ausgewählt aus: Holz, Blech, Kunststoff, Kunststofffolie, oder Metallfolie, oder einen Kunststoff aufweist, der in einem Vlies oder einem Gewebe enthalten ist, derart, dass beim Verpressen sich aus dem zweiten Trägermaterial eine zweite Trägerschicht bildet, die mit der ersten Trägerschicht mittels einer Leimschicht verbunden ist.

In einer Ausführungsform weist das Verfahren die Stufe (Y1) auf, sofern im Verfahren die Stufen (T1) und (U1) verwendet werden:
- (Y1): Positionieren des ersten Trägermaterials auf ein zweites Trägermaterial, wobei das zweite Trägermaterial einen Kunststoff aufweist, der in einem Vlies oder einem Gewebe enthalten ist, derart, dass beim Verpressen sich aus dem zweiten Trägermaterial eine zweite Trägerschicht bildet, die mit der ersten Trägerschicht mittels einer Leimschicht verbunden ist.

In einer weiteren Ausführungsform weist das Verfahren die Stufe (Y2) auf, sofern im Verfahren die Stufen (T2) und (U2) verwendet werden:
- (Y2): Positionieren des ersten Trägermaterials unter ein zweites Trägermaterial, wobei das zweite Trägermaterial einen Kunststoff aufweist, der in einem Vlies oder einem Gewebe enthalten ist, derart, dass beim Verpressen sich aus dem zweiten Trägermaterial eine zweite Trägerschicht bildet, die mit der ersten Trägerschicht mittels einer Leimschicht verbunden ist.

In einer weiteren Ausführungsform kann die freie Oberfläche der zweiten Trägerschicht weiterverarbeitet werden. Vorzugsweise kann auf diese Oberfläche nach bekannten Verfahren ein Kunststoff aufgebracht werden, vorzugsweise durch Hinterspritzen. Vorzugsweise ist dieser Kunststoff ausgewählt aus Acryl-Butadien-Styrol-Copolymerisaten, Styrol-Acrylnitril-Copolymerisaten, Acrylester-Styrol-Acrylnitril-Copolymerisaten, oder zwei oder mehr davon. Die zweite Trägerschicht kann das Eindringen dieses Kunststoffes in die erste Trägerschicht oder gar in die dekorative Schicht verhindern.

Somit weist in einer Ausführungsform das Verfahren weiter die Stufe (Z) auf:
- (Z): Aufbringen eines Kunststoffes auf die der ersten Trägerschicht abgewandten Seite der zweiten Trägerschicht.

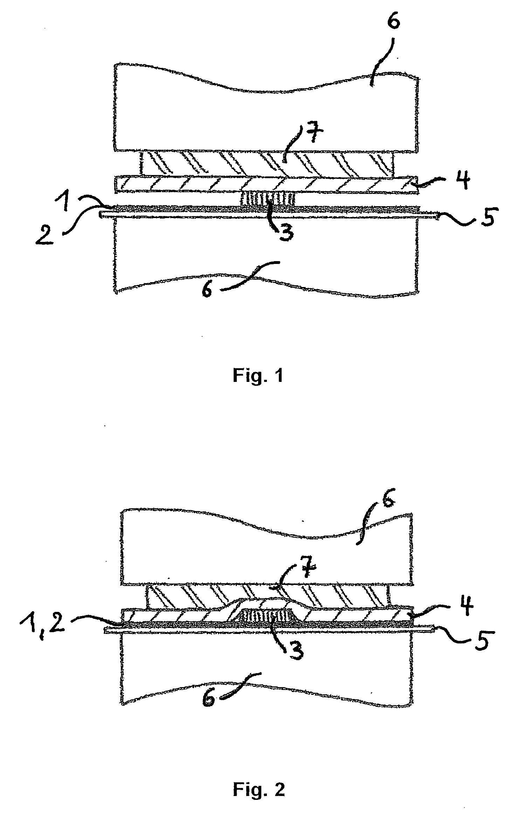

**Fig. 1** zeigt die Bestückung einer Pressvorrichtung, welche Pressbacken oder Pressplatten 6 und ein Presspolster 7 aufweist, mit einem ersten und einem zweiten dekorativen Material. Das erste dekorative Material ist ein Furnier 4, unter welches ein zweites dekoratives Material in Form eines Metalls 3, auch als Metallintarsie bezeichnet, positioniert wird. Dabei wird das zweite dekorative Material 3 auf einem ersten Trägermaterial 1, welches in Form eines Kunststoffvlieses vorliegt, positioniert. Das Vlies weist Leim 2 auf. Der Leim befindet sich im Vlies, kann sich aber zusätzlich auch auf und unter dem Vlies befinden. Unter dem ersten Trägermaterial befindet sich ein zweites Trägermaterial 5, vorzugsweise in Form eines Kunststoffvlieses.

**Fig. 2** zeigt das Schließen der Presse unter Druck- und Temperatureinwirkung, wobei die Metallintarsie 3 in das Furnier 4 eindringt und dieses deformiert. Durch die Hitzeeinwirkung und dem Druck beim Schließen der Pressbacken 6 der Pressvorrichtung schmilzt der Leim 2 und bildet eine Leimschicht, welche eine feste Verklebung zwischen dem ersten Trägermaterial 1, nämlich dem Vlies, der Metallintarsie 3 und dem Furnier 4 bildet. Gleichzeitig bildet sich auch eine feste Verklebung in Form einer weiteren Leimschicht (nicht gezeigt), welche sich zwischen dem ersten Trägermaterial 1 und dem zweiten Trägermaterial ausbildet 5.

Der Begriff "*feste Verklebung*" bedeutet, dass sich die Verklebung nach einer einstündigen Lagerung des Mehrschichtverbundes in heißem Wasser mit einer Temperatur von 80 °C nicht löst.

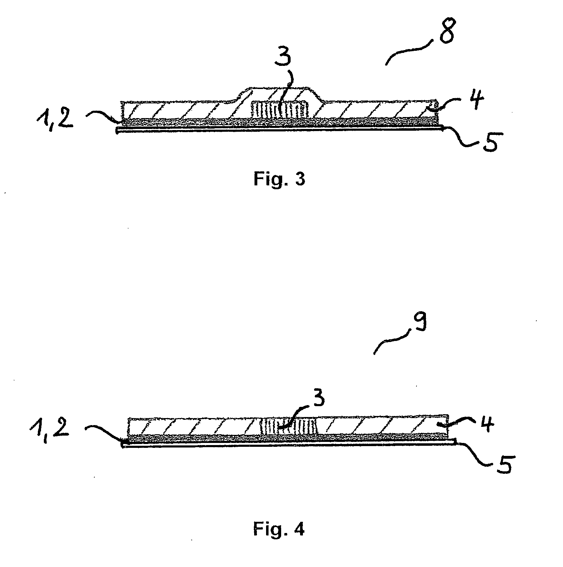

**Fig. 3** zeigt den verpressten rohen Mehrschichtverbund 8, der nach dem Öffnen der Pressbacken der Pressvorrichtung entnommen wurde. Das zweite dekorative Material, nämlich das Metall 3, dringt beim Verpressen in das erste dekorative Material, nämlich das Furnier 4, ein und deformiert dieses, wobei sich eine deformierte dekorative Schicht bildet. Eine Oberfläche des ersten und des zweiten dekorativen Materials liegen in einer Ebene.

**Fig. 4** zeigt den abgeschliffenen Mehrschichtverbund 9, der dadurch entsteht, dass der deformierten Bereich der dekorativen Schicht des verpressten rohen Mehrschichtverbundes 8 so lange abgeschliffen wird, bis das erste dekorative Material 4 und das zweite dekorative Material 3 in einer Ebene liegen oder flächig vorliegen und die gleiche Dicke aufweisen.

In einem ***dritten Aspekt*** betrifft die Erfindung die Verwendung eines Mehrschichtverbundes wie im ***ersten Aspekt*** definiert, oder eines Mehrschichtverbundes hergestellt nach einem Verfahren wie im ***zweiten Aspekt*** definiert.

Der Mehrschichtverbund kann beim Möbel-, Fahrzeug-, Schiffs- und Flugzeugbau sowie für die Herstellung von Wandpanelen, Innenausbauelementen, Fußböden, Gehäusen und Dekorelementen verwendet werden.

In einem ***vierten Aspekt*** betrifft die Erfindung den verpressten rohen Mehrschichtverbund, wie er beispielhaft in **Fig. 3** dargestellt ist.

Demgemäß betrifft die Erfindung einen Mehrschichtverbund mindestens aufweisend:
eine dekorative Schicht aufweisend ein erstes dekoratives Material und ein zweites dekoratives Material, wobei eine Oberfläche des ersten dekorativen Materials und eine Oberfläche des zweiten dekorativen Materials in der dekorativen Schicht in einer Ebene liegen, und die andere Oberfläche des ersten dekorativen Materials und die andere Oberfläche des zweiten dekorativen Materials in der dekorativen Schicht nicht in einer Ebene liegen, derart, dass zumindest ein Bereich des ersten dekorativen Materials durch das zweite dekorative Material deformiert ist;
eine erste Trägerschicht für eine Leimschicht, wobei die Trägerschicht einen Kunststoff aufweist, der in einem Vlies oder einem Gewebe enthalten ist;
wobei die dem deformierten Bereich abgewandte Seite der dekorativen Schicht mit der ersten Trägerschicht durch die Leimschicht verbunden ist.

Der Begriff *"dass zumindest ein Bereich des ersten dekorativen Materials durch das zweite dekorative Material deformiert wird'* bedeutet, dass in der dekorativen Schicht das zweite dekorative Material zumindest teilweise durch das erste dekorative Material bedeckt ist.

Der Begriff "*deformiert*" wird synonym zum Begriff "*verformt*" verwendet.

In einer weiteren Ausführungsform weist dieser rohe Mehrschichtverbund auf der deformierten dekorativen Schicht das Presspolster der Pressvorrichtung auf. Dieses auf dem rohen Mehrschichtverbund anhaftende Presspolster kann von diesem abgenommen werden.

In einer Ausführungsform liegt das Presspolster auf dem Mehrschichtverbund in Form einer abnehmbaren Schicht vor. In einer Ausführungsform weist der Mehrschichtverbund eine abnehmbare Schicht eines Materials auf, welches Cellulosefasern aufweist.

Der rohe Mehrschichtverbund kann nach einem Verfahren hergestellt werden, welches zumindest die im ***zweiten Aspekt*** definierten Stufen (S) bis (W), aber nicht die Stufe (X) aufweist.

### Bezugszeichenliste

- 1: erstes Trägermaterial
- 2: Leim in Form eines Leimfilms oder einer Leimschicht
- 3: zweites dekoratives Material, beispielsweise Metall
- 4: erstes dekoratives Material, beispielsweise Holz in Form eines Furniers
- 5: zweites Trägermaterial
- 6: Pressbacken oder Pressplatten einer Pressvorrichtung
- 7: Presspolster
- 8: Mehrschichtverbund mit deformierter dekorativer Schicht
- 9: Abgeschliffener Mehrschichtverbund

## Patentansprüche

1. Mehrschichtverbund mindestens aufweisend:
eine dekorative Schicht aufweisend ein erstes dekoratives Material und ein zweites dekoratives Material, wobei das erste und das zweite dekorative Material in der dekorativen Schicht in einer Ebene liegen und die gleiche Dicke aufweisen;
eine erste Trägerschicht für eine Leimschicht, wobei die erste Trägerschicht einen Kunststoff aufweist, der in einem Vlies oder einem Gewebe enthalten ist;
wobei die dekorative Schicht mit der ersten Trägerschicht durch die Leimschicht verbunden ist.

2. Mehrschichtverbund nach Anspruch 1, wobei das erste dekorative Material aus Holz besteht oder Holz aufweist.

3. Mehrschichtverbund nach Anspruch 1 oder 2, wobei das zweite dekorative Material ausgewählt ist aus der Gruppe bestehend aus: Holz, Metall, Kunststoff, Keramik, Glas, Glasfaser oder Kohlefaser, oder zwei oder mehr davon;
oder wobei das zweite dekorative Material ausgewählt ist aus der Gruppe bestehend aus: Holz, Metall, Kunststoff, Keramik, Glas, Glasfaser oder Kohlefaser, oder zwei oder mehr davon, wobei das zweite dekorative Material vom ersten dekorativen Material vollständig umgeben ist oder von diesem nur teilweise umgeben ist.

4. Mehrschichtverbund nach einem der vorstehenden Ansprüche, wobei der Kunststoff des ersten Trägermaterials ausgewählt ist aus der Gruppe bestehend aus: Cellulose, Polyester, Polyether, Polyamid, Polysulfon, oder Polyolefin, oder zwei oder mehr davon;
oder wobei der Leim der Leimschicht ausgewählt ist aus der Gruppe bestehend aus: Melaminharz, Phenolharz, Polyvinylalkohol, Polyurethan, Ethylenvinylacetat, oder zwei oder mehr davon;
oder wobei der Kunststoff des ersten Trägermaterials ausgewählt ist aus der Gruppe bestehend aus: Cellulose, Polyester, Polyether, Polyamid, Polysulfon, oder Polyolefin, oder zwei oder mehr davon, wobei der Leim der Leimschicht ausgewählt ist aus der Gruppe bestehend aus: Melaminharz, Phenolharz, Polyvinylalkohol, Polyurethan, Ethylenvinylacetat, oder zwei oder mehr davon.

5. Mehrschichtverbund nach einem der vorstehenden Ansprüche, wobei die erste Trägerschicht auf der der dekorativen Schicht abgewandten Seite mittels einer Leimschicht mit einer zweiten Trägerschicht verbunden ist, wobei die zweite Trägerschicht ein Material aufweist ausgewählt aus: Holzwerkstoff, Holz, Blech, Kunststoff, Kunststofffolie, oder Metallfolie, oder Kunststoff, der in einem Vlies oder einem Gewebe enthalten ist;
oder wobei die erste Trägerschicht auf der der dekorativen Schicht abgewandten Seite mittels einer Leimschicht mit einer zweiten Trägerschicht verbunden ist, wobei die zweite Trägerschicht ein Material aufweist ausgewählt aus: Holzwerkstoff, Holz, Blech, Kunststoff, Kunststofffolie, oder Metallfolie, oder Kunststoff, der in einem Vlies oder Gewebe enthalten ist, wobei der Kunststoff des Vlieses oder des Gewebes ausgewählt ist aus der Gruppe bestehend aus: Cellulose, Polyester, Polyether, Polyamid, Polysulfon, Polyolefin.

6. Mehrschichtverbund nach einem der vorstehenden Ansprüche, wobei die dekorative Schicht eine Dicke von 2 mm oder weniger aufweist;
oder wobei die zweite Trägerschicht auf der der ersten Trägerschicht abgewandten Seite einen Kunststoff aufweist, wobei dieser Kunststoff ein zusätzlicher Kunststoff ist, wenn die zweite Trägerschicht einen Kunststoff aufweist, der in einem Vlies oder einem Gewebe enthalten ist:
oder wobei die dekorative Schicht eine Dicke von 2 mm oder weniger aufweist, wobei die zweite Trägerschicht auf der der ersten Trägerschicht abgewandten Seite einen Kunststoff aufweist, wobei dieser Kunststoff ein zusätzlicher Kunststoff ist, wenn die zweite Trägerschicht einen Kunststoff aufweist, der in einem Vlies oder einem Gewebe enthalten ist.

7. Verfahren zur Herstellung eines Mehrschichtverbundes wie in einem der Ansprüche 1 bis 6 definiert, aufweisend zumindest die Stufen (S) bis (X):
(S) Bereitstellen eines ersten dekorativen Materials;
(T) Kontaktieren eines zweiten dekorativen Materials mit dem ersten dekorativen Material;
(U) Kontaktieren eines ersten Trägermaterials mit dem zweiten dekorativen Material, wobei das erste Trägermaterial einen Kunststoff und Leim aufweist, wobei der Kunststoff in einem Vlies oder einem Gewebe enthalten ist;
(V) Verpressen des ersten dekorativen Materials mit dem zweiten dekorativen Material und dem ersten Trägermaterial in einer Pressvorrichtung bei einer Temperatur, welche ausreicht, den Leim zu aktivieren, wobei sich aus dem ersten Trägermaterial und dem Leim eine erste Trägerschicht und eine Leimschicht bilden, und wobei das zweite dekorative Material in das erste dekorative Material eindringt und einen Bereich des ersten dekorativen Materials deformiert, wobei eine Oberfläche des ersten und des zweiten dekorativen Materials auf der ersten Trägerschicht in einer Ebene liegen, und wobei die Pressvorrichtung so ausgestaltet ist, dass sie ein deformierbares Presspolster aufweist, welches erlaubt, den durch das zweite dekorative Material im ersten dekorativen Material deformierten Bereich aufzunehmen, wobei das erste und das zweite dekorative Material eine deformierte dekorative Schicht bilden, wobei die deformierte dekorative Schicht mit der ersten Trägerschicht über die Leimschicht verbunden ist;
(W) Entnehmen des verpressten Verbunds der Stufe (V) aus der Pressvorrichtung;
(X) Abschleifen des deformierten Bereichs der dekorativen Schicht so lange, bis das erste und das zweite dekorative Material in einer Ebene liegen und die gleiche Dicke aufweisen;

8. Verfahren nach Anspruch 7, wobei das deformierbare Presspolster ein Material aufweist, welches Cellulosefasern aufweist, wobei das Presspolster mit der Pressvorrichtung nicht fest verbunden ist.

9. Verfahren nach Anspruch 7 oder 8, wobei der Druck beim Verpressen im Bereich von 1 - 30 N/mm², vorzugsweise 5 bis 30 N/mm², mehr bevorzugt 20 - 30 N/mm²und die Temperatur im Bereich von 50 - 200 °C, vorzugsweise 100 - 180 °C, mehr bevorzugt 130 - 180 °C liegt.

10. Verfahren nach einem der Ansprüche 7 bis 9, weiter aufweisend die Stufe (Y):
(Y) Kontaktieren des ersten Trägermaterials mit einem zweiten Trägermaterial, wobei das zweite Trägermaterial ein Material aufweist ausgewählt aus: Holzwerkstoff, Holz, Blech, Kunststoff, Kunststofffolie, oder Metallfolie, oder einen Kunststoff aufweist, der in einem Vlies oder einem Gewebe enthalten ist, derart, dass beim Verpressen sich aus dem zweiten Trägermaterial eine zweite Trägerschicht bildet, die mit der ersten Trägerschicht mittels einer Leimschicht verbunden ist.

11. Verfahren nach Anspruch 10, weiter aufweisend die Stufe (Z):
(Z) Aufbringen eines Kunststoffes auf die der ersten Trägerschicht abgewandten Seite der zweiten Trägerschicht, vorzugsweise durch Hinterspritzen.

12. Verwendung eines Mehrschichtverbunds wie in einem der Ansprüche 1 bis 6 definiert, oder Verwendung eines Mehrschichtverbunds hergestellt nach einem der Ansprüche 7 bis 11, beim Möbel-, Fahrzeug-, Schiffs- und Flugzeugbau sowie für die Herstellung von Wandpanelen, Innenausbauelementen, Fußböden, Gehäusen und Dekorelementen.

13. Mehrschichtverbund, mindestens aufweisend:
eine dekorative Schicht aufweisend ein erstes dekoratives Material und ein zweites dekoratives Material, wobei eine Oberfläche des ersten dekorativen Materials und eine Oberfläche des zweiten dekorativen Materials in der dekorativen Schicht in einer Ebene liegen, und die andere Oberfläche des ersten dekorativen Materials und die andere Oberfläche des zweiten dekorativen Materials in der dekorativen Schicht nicht in einer Ebene liegen, derart, dass zumindest ein Bereich des ersten dekorativen Materials durch das zweite dekorative Material deformiert ist;
eine erste Trägerschicht für eine Leimschicht, wobei die Trägerschicht einen Kunststoff aufweist, der in einem Vlies oder einem Gewebe enthalten ist;
wobei die dem deformierten Bereich abgewandte Seite der dekorativen Schicht mit der ersten Trägerschicht durch die Leimschicht verbunden ist.

14. Mehrschichtverbund nach Anspruch 13, wobei zumindest dem Bereich des ersten dekorativen Materials, welches durch das zweite dekorative Material verformt ist, ein Material anhaftet, welches Cellulosefasern aufweist.

15. Verfahren zur Herstellung eines Mehrschichtverbundes wie in Anspruch 13 definiert, zumindest aufweisend die Stufen (S) bis (W), aber nicht die Stufe (X), wie in Anspruch 7 definiert, oder eines Mehrschichtverbundes wie in Anspruch 14 definiert, zumindest aufweisend die Stufen (S) bis (W), aber nicht die Stufe (X), wie in Anspruch 7 definiert und zusätzlich zumindest aufweisend das Verfahren wie in Anspruch 8 definiert.
